# FASCICULE DE BREVET EUROPEEN

(11) **EP 3 230 602 B1**
(45) Date de publication et mention de la délivrance du brevet: **21.11.2018**
(21) Numéro de dépôt: 15817950.7
(22) Date de dépôt: 24.11.2015
(51) Int. Cl.: F16B 5/02, F01D 17/16, F04D 29/56

(54) **ANNEAU DE COMMANDE D'UN ÉTAGE D'AUBES À CALAGE VARIABLE POUR UNE TURBOMACHINE**
RING ZUR STEUERUNG EINER PHASE VON LEITSCHAUFELN MIT VARIABLEN EINSTELLUNGEN FÜR EINEN TURBINENMOTOR
RING FOR CONTROLLING A STAGE OF VARIABLE-SETTING VANES FOR A TURBINE ENGINE

(30) Priorité: 09.12.2014 FR 1462120
(43) Date de publication de la demande: 18.10.2017
(73) Titulaire: Safran Aircraft Engines, 75015 Paris (FR)
(72) Inventeur: EDYNAK, Jérémy, 77550 Moissy-Cramayel cedex (FR); BAZOT, Olivier, 77550 Moissy-Cramayel cedex (FR)
(74) Mandataire: Gevers & Orès
(86) Numéro de dépôt international: PCT/FR2015/053182
(87) Numéro de publication internationale: WO 2016/092172

(56) Documents cités:
- EP-A1- 0 375 593
- EP-A1- 1 820 942
- EP-A2- 1 696 134
- FR-A1- 2 882 577

## Description

### DOMAINE TECHNIQUE

La présente invention concerne un anneau de commande d'un étage d'aubes à calage variable pour une turbomachine.

### ETAT DE L'ART

L'état de l'art comprend notamment les documents EP-A2-1 696 134, EP-A1-1 820 942, FR-A1-2 882 577 et EP-A1-0 375 593.

Un étage de ce type comprend une rangée annulaire d'aubes de stator à calage variable (aussi appelées VSV - acronyme de *Variable Stator Vanes*) qui sont portées par un carter annulaire externe, en général d'un compresseur de la turbomachine. Chaque aube comprend une pale qui est reliée à son extrémité radialement externe par une platine à contour sensiblement circulaire à un pivot cylindrique radial qui définit l'axe de rotation de l'aube et qui est guidé en rotation dans un orifice correspondant du carter externe. L'extrémité radialement interne de la pale de chaque aube comprend en général un second pivot cylindrique s'étendant le long de l'axe de rotation de l'aube et guidé en rotation dans un orifice d'un carter interne du compresseur.

L'extrémité radialement externe du pivot externe de chaque aube est reliée par une biellette à un anneau de commande déplacé en rotation autour du carter externe par des moyens d'actionnement à vérin ou analogue. La rotation de l'anneau de commande est transmise par les biellettes aux pivots externes des aubes et les fait tourner autour de leurs axes.

Le calage angulaire des aubes de stator dans une turbomachine est destiné à adapter la géométrie du compresseur à son point de fonctionnement et notamment à optimiser le rendement et la marge au pompage de cette turbomachine et à réduire sa consommation de carburant dans les différentes configurations de vol.

Chacune de ces aubes est déplaçable en rotation autour de son axe entre une première position « d'ouverture » ou « de pleine ouverture » dans laquelle chaque aube s'étend sensiblement parallèlement à l'axe longitudinal de la turbomachine, et une seconde position « de fermeture » ou « de quasi-fermeture » dans laquelle les aubes sont inclinées par rapport à l'axe de la turbomachine et réduisent ainsi la section de passage de l'air à travers l'étage d'aubes.

L'anneau de commande doit être centré et guidé en rotation autour de son axe de rotation. Dans la technique actuelle, le carter externe comprend des pistes sur lesquelles la périphérie interne de l'anneau peut venir coopérer par frottement. Le carter comprend des organes, tels que des patins, d'appui et de guidage sur les pistes. Les patins servent, d'une part, à assurer la concentricité de l'anneau autour du carter par ajustement de jeux patins/carter et, d'autre part, à limiter la déformation de l'anneau engendrée par les efforts aérodynamiques sur les aubes à calage variable s'exerçant sur la cinématique lors du fonctionnement.

Il est en effet important d'avoir des jeux radiaux à froid entre les patins et les pistes du carter, afin d'autoriser des dilatations thermiques du carter et permettre une bonne cinématique du calage dans toutes les configurations du moteur. Cependant, on a constaté, notamment dans le cas de moyens d'actionnement à un seul vérin, qu'en fonction des plages d'ouverture et de fermeture des aubes à calage variable, les jeux à froid entraînent un désaxage de l'anneau de commande vis-à-vis du carter, ce qui influe négativement sur la précision du calage. Ce désaxage consomme les jeux à froid de manière hétérogène en fonction de l'angle de calage.

Les patins sont fixés au corps de l'anneau par des moyens de fixation. On a déjà proposé de fixer les patins au moyen de vis de réglage, chaque vis de réglage traversant un orifice radial du corps de l'anneau et comportant une première extrémité filetée radialement interne vissée dans un orifice taraudé d'un patin et une seconde extrémité filetée radialement externe vissée dans l'anneau sur laquelle est vissée un écrou qui prend appui sur le corps de l'anneau. La seconde extrémité filetée a un filetage à pas standard alors que la première extrémité filetée a un filetage à pas fin métrique qui permet un réglage fin du jeu sous patin. Cette liaison filetée n'étant pas bloquée, il existe un jeu entre le patin et la vis de réglage.

En fonctionnement, cette présence de jeu provoque, sous l'effet des vibrations environnantes, un déplacement relatif entre les pièces conduisant à la destruction de la liaison filetée. Par conséquent, la fonction du patin n'est plus assurée. De plus, cette usure à un impact direct sur l'angle de calage des aubes en fonctionnement pouvant impacter la bonne opérabilité du moteur (pompage en cas de nombre important de patins usés sur un même étage).

La présente invention propose une solution simple, efficace et économique à au moins une partie des problèmes précités.

### EXPOSE DE L'INVENTION

L'invention propose un anneau de commande d'un étage d'aubes à calage variable pour une turbomachine, comportant un corps annulaire destiné à s'étendre autour d'un carter, des moyens configurés pour être reliés à des pivots desdites aubes, et des moyens qui sont configurés pour coopérer avec le carter afin de centrer et de guider ledit corps, et qui comportent au moins un organe d'appui sur ledit carter, qui est fixé au corps par des moyens de fixation, caractérisé en ce que lesdits moyens de fixation comprennent au moins une douille qui comporte :
- un alésage axial de passage dudit organe ou d'un élément de support dudit organe,
- une fente traversante débouchant dans ledit alésage et configuré pour autoriser une déformation sensiblement radiale de la douille, et
- un filetage externe de vissage de la douille dans un filetage complémentaire d'un orifice dudit corps,
ladite douille étant configurée de sorte que, lors de son vissage, elle coopère avec ledit corps pour se déformer sensiblement radialement depuis une première position dans laquelle ledit organe ou support peut être monté et déplacé dans ledit alésage, jusqu'à une seconde position dans laquelle ladite douille est contrainte radialement et montée serrée sur ledit organe ou support qui est ainsi immobilisé vis-à-vis de la douille.

On comprend ainsi que c'est le vissage de la douille qui assure la fixation de l'organe d'appui ou de son support vis-à-vis du carter. En position desserrée ou dévissée, la douille est libre sans contrainte et son alésage interne a un diamètre interne permettant un montage et un déplacement de l'organe ou du support, et en particulier son positionnement précis vis-à-vis du carter. En position vissée et serrée, la douille est contrainte radialement et son alésage interne a un diamètre interne restreint. La douille est ainsi montée serrée sur l'organe ou le support pour l'immobiliser vis-à-vis du carter dans la position précise. Cette technologie présente l'avantage de limiter le risque de dégradation de l'anneau en limitant la transmission directe de couple dans celui-ci.

L'anneau selon l'invention peut comprendre une ou plusieurs des caractéristiques suivantes, prises isolément les unes des autres ou en comparaison les unes avec les autres :
- ledit organe ou support comprend une tige cylindrique engagée axialement dans ledit alésage,
- ledit organe comprend au moins un patin d'appui sur le carter,
- ledit patin est solidaire de ladite tige, et est par exemple formé d'une seule pièce avec ladite tige,
- des moyens élastiquement déformables sont interposés entre le patin et le corps pour solliciter ledit patin contre ledit carter,
- lesdits moyens élastiquement déformables comprennent au moins un ressort de compression, par exemple hélicoïdal, monté autour de ladite tige,
- ladite douille comprend au moins une partie sensiblement tronconique configurée pour coopérer avec une partie tronconique dudit orifice de montage de la douille dudit corps,
- ladite douille comprend une partie cylindrique comportant ledit filetage externe, et
- ledit corps comprend des moyens configurés pour être reliés à des moyens d'actionnement en vue de la rotation dudit corps autour d'un carter de la turbomachine.

La présente invention concerne également un étage d'aubes à calage variable pour une turbomachine, comportant une rangée annulaire d'aubes à calage variable comportant chacune une pale et un pivot cylindrique à son extrémité radialement externe, l'étage comportant en outre un carter annulaire comportant des orifices de montage des pivots des aubes, caractérisé en ce que lesdits pivots sont reliés par des leviers à un anneau tel que décrit ci-dessus.

La présente invention concerne encore une turbomachine, caractérisée en ce qu'elle comprend au moins un anneau ou au moins un étage tel que décrit ci-dessus.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une demi-vue schématique partielle en coupe axiale d'étages d'aubes à calage variable de turbomachine ;
- la figure 2 est une vue schématique partielle en coupe transversale d'un anneau de commande d'aubes à calage variable de turbomachine, selon la technique antérieure ;
- la figure 3 est une vue schématique partielle en coupe transversale d'un anneau de commande d'aubes à calage variable de turbomachine, selon l'invention ;
- les figures 4a et 4b sont des vues schématiques en coupe selon la ligne IV-IV de la figure 3 et représentent respectivement deux positions de la douille des moyens de fixation selon l'invention.

### DESCRIPTION DETAILLEE

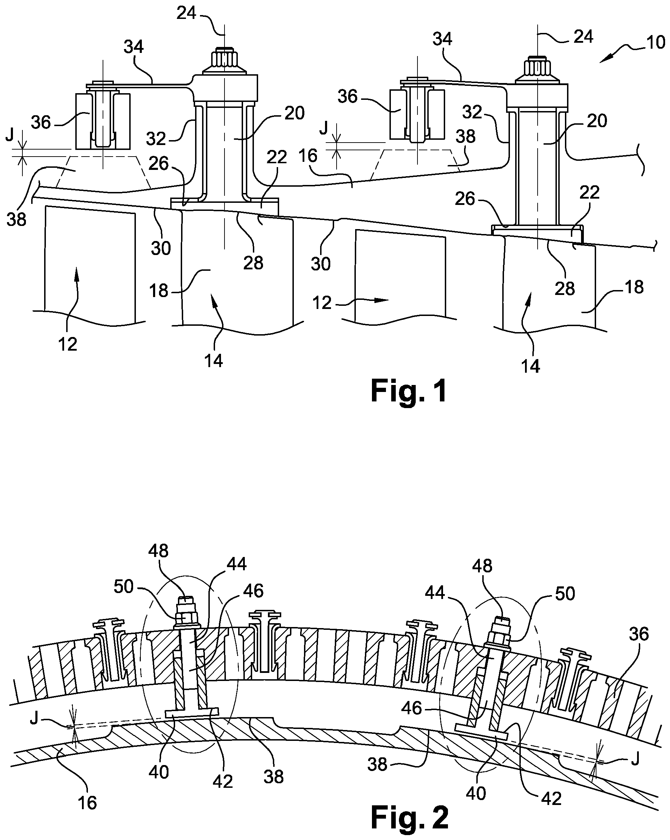

En figure 1, on a représenté schématiquement, en coupe axiale, une partie d'un compresseur haute-pression 10 d'une turbomachine, en particulier d'une turbomachine d'aéronef, à plusieurs étages, chaque étage comprenant une rangée annulaire d'aubes mobiles 12 portées par le rotor (non représenté) de la turbomachine et une rangée annulaire d'aubes fixes 14 formant redresseurs portées par un carter 16 du stator de la turbomachine, l'orientation angulaire des aubes 14 étant réglable pour optimiser l'écoulement gazeux dans le compresseur 10.

Chaque aube 14 comprend une pale 18 et un pivot cylindrique 20 radialement externe, relié par un disque ou « platine » 22 s'étendant perpendiculairement à l'axe 24 de l'aube dans un logement 26 correspondant du carter 16. La surface radialement interne 28 du disque est alignée avec la paroi interne 30 du carter pour ne pas s'opposer à l'écoulement gazeux.

Le pivot cylindrique 20 de chaque aube 14 s'étend à l'intérieur d'une cheminée cylindrique radiale 32 du carter 16 et son extrémité radialement externe est reliée par une biellette 34 à un anneau de commande 36 qui entoure le carter 16 et qui est associé à des moyens d'actionnement (non représentés) permettant de le faire tourner dans un sens ou dans l'autre autour de l'axe longitudinal du carter 16 pour entraîner les aubes 14 d'une rangée annulaire en rotation autour de leurs axes 24.

Les aubes 14 sont déplaçables en rotation autour de leurs axes 24 entre une position de fermeture ou de quasi-fermeture et une position d'ouverture ou de pleine ouverture.

Dans la position de fermeture, les pales 18 des aubes sont inclinées par rapport à l'axe longitudinal de la turbomachine et définissent entre elles une section minimale de passage d'air dans la veine. Les aubes 14 sont amenées dans cette position lorsque la turbomachine est à bas régime ou au ralenti, le débit d'air s'écoulant dans le compresseur ayant alors une valeur minimale.

Dans la position d'ouverture, les pales 18 des aubes s'étendent sensiblement parallèlement à l'axe de la turbomachine de façon à ce que la section de passage d'air entre les pales soit maximale. Les aubes 14 sont amenées dans cette position lorsque la turbomachine est au régime plein gaz, le débit d'air s'écoulant dans le compresseur ayant alors une valeur maximale.

Dans la technique antérieure, le carter 16 comprend à sa périphérie externe des pistes 38 en saillie de centrage et de guidage des anneaux 36, qui sont ici schématiquement représentées par des traits pointillés. Chaque anneau 36 entoure sa ou ses pistes de guidage 38. La référence J désigne les jeux radiaux qui sont prévus à froid entre un anneau 36 et sa ou ses pistes 38. Ces jeux J doivent être suffisamment importants pour permettre des dilatations thermiques du carter 16 mais ne permettent pas de régler avec précision les positions angulaires des aubes 14.

Comme cela est mieux visible en figure 2, ces jeux J sont réglés par l'intermédiaire de patins de guidage 40 qui sont fixés au corps de l'anneau 36 et qui sont configurés pour coopérer par appui et glissement avec les pistes 38 afin d'assurer la concentricité de l'anneau autour du carter et de limiter la déformation de l'anneau engendrée par les efforts aérodynamiques sur les aubes 14 en fonctionnement.

Dans la technique antérieure représentée en figure 2, chaque patin 40 est porté par un élément de support 42 comportant une cheminée rectangulaire engagée dans un orifice radial du corps de l'anneau 36. L'élément de support 42 est fixé au corps de l'anneau au moyen d'une vis de réglage 44 qui s'étend sensiblement radialement dans l'orifice du corps de l'anneau, et qui comprend une première extrémité filetée 46 radialement interne vissée dans un orifice taraudé de la cheminée de l'élément de support 42 et une seconde extrémité filetée 48 radialement externe vissée dans l'anneau sur laquelle est vissée un écrou 50 qui prend appui sur le corps de l'anneau 36. La seconde extrémité filetée a un filetage à pas standard alors que la première extrémité filetée a un filetage à pas fin métrique qui permet un réglage fin du jeu J sous patin. Cette liaison filetée n'étant pas bloquée, il existe un jeu entre le patin et la vis de réglage, qui est problématique comme expliqué dans ce qui précède.

L'invention permet de remédier à ce problème grâce à de nouveaux moyens de fixation de l'organe ou du patin de guidage sur le corps de l'anneau.

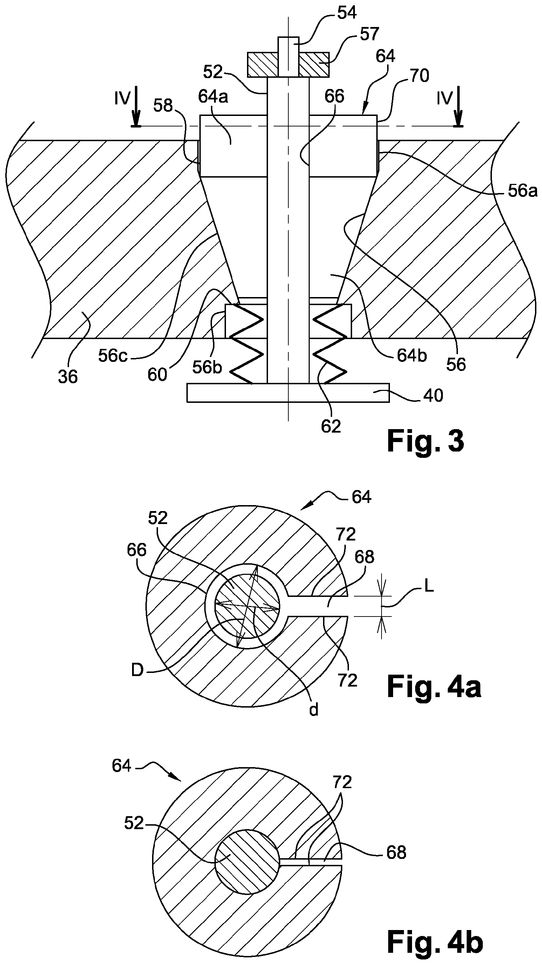

Les figures 3, 4a et 4b représentent un mode de réalisation de l'invention dans lesquels les éléments décrits dans ce qui précède sont référencés par les mêmes chiffres.

L'anneau de commande 36 comprend ici un corps annulaire, qui peut être sectorisé et formé d'au moins deux secteurs disposés circonférentiellement bout à bout et liés l'un à l'autre.

Comme dans l'art antérieur représenté aux figures 1 et 2, le corps de l'anneau 36 comprend des orifices radiaux dans lesquels sont logés des pions cylindriques portés par les biellettes. Chaque pion est en général centré et guidé en rotation dans un orifice par au moins un palier à douille monté dans l'orifice.

Comme décrit dans ce qui précède, le corps de l'anneau 36 comprend en outre des moyens de liaison à un actionneur, qui peuvent comprendre par exemple une chape portant un axe sur lequel est articulée une extrémité d'une tige de piston d'un actionneur, lorsque ce dernier est un vérin par exemple.

L'anneau 36 comprend en outre des organes, tels que des patins 40, d'appui sur le carter et en particulier sur des pistes du carter. Dans l'exemple représenté, chaque patin 40 est relié à une tige cylindrique 52 et est formé d'une seule pièce avec cette tige 52. En variante, le patin 40 pourrait être porté par un élément de support, similaire à celui de la figure 2. Cet élément de support serait alors solidaire de la tige cylindrique 52 et serait par exemple formé d'une seule pièce avec cette dernière.

La tige cylindrique 52 est sensiblement lisse sur toute son étendue longitudinale. Elle est reliée au patin 40 par son extrémité radialement interne et comprend un filetage externe 54 à son extrémité radialement externe. La tige 52 est engagée dans un orifice 56 sensiblement radial du corps de l'anneau 36, de préférence radialement depuis l'intérieur de l'anneau.

Un écrou 57 est vissé sur le filetage externe 54 de la tige 52 pour empêcher son désengagement du corps de l'anneau, comme cela sera expliqué plus en détail dans ce qui suit.

Dans l'exemple représenté, l'orifice 56 du corps de l'anneau comprend essentiellement trois tronçons axiaux 56a, 56b, 56c, successifs. L'orifice 56 comprend un premier tronçon 56a radialement externe qui a une forme général sensiblement cylindrique et comprend un filetage interne 58. Ce tronçon 56a débouche à son extrémité radialement externe sur la périphérie externe du corps de l'anneau. L'orifice 56 comprend un second tronçon 56b radialement interne qui est sensiblement cylindrique et de diamètre plus petit que celui du premier tronçon 56a. Ce tronçon 56b débouche à son extrémité radialement interne sur la périphérie interne du corps de l'anneau. L'orifice 56 comprend enfin un troisième tronçon 56c intermédiaire qui est sensiblement tronconique et s'étend entre les tronçons 56a, 56b. Le diamètre de ce tronçon diminue radialement de l'intérieur vers l'extérieur. L'extrémité radialement externe de plus grand diamètre du tronçon 56c est reliée à l'extrémité radialement interne du tronçon 56a et est sensiblement de même diamètre que le tronçon 56a. L'extrémité radialement interne du tronçon 56c a un diamètre plus faible que celui du tronçon 56a et est reliée à ce dernier par un épaulement annulaire 60 orientée radialement vers l'intérieur. Les tronçons 56a, 56b, 56c sont sensiblement coaxiaux.

Comme cela est visible en figure 3, un moyen élastiquement déformable, tel qu'un ressort de compression 62, ici hélicoïdal, est monté entre le corps de l'anneau 36 et le patin 40 afin de le solliciter vers le carter et permettre son centrage par rapport à ce dernier. Le ressort 62 est ici monté autour de la tige 52, coaxialement à celle-ci, et comprend une extrémité radialement interne en appui contre une face radialement externe du patin 40, et une extrémité radialement externe en appui contre l'épaulement 60 précité. Le ressort 62 est ici au moins en partie logé dans le tronçon 56b de l'orifice 56.

Comme on le voit également dans les dessins, la tige 52 a une longueur ou dimension longitudinale supérieure à la dimension ou épaisseur radiale du corps de l'anneau. Cette longueur peut être mesurée entre le patin 40 et le filetage 54, et correspondre à la longueur de la partie cylindrique lisse de la tige. Ainsi, la tige peut se déplacer en direction radiale vis-à-vis du corps du carter et est bloquée vers l'intérieur par appui de l'écrou 56 sur le corps du carter, et vers l'extérieur par appui du patin 40 sur ce corps (le patin 40 ayant ici une dimension transversale supérieure à celle de l'orifice).

Selon l'invention, les moyens de fixation du patin 40 ou de son élément de support comprennent une douille 64 telle que représentée aux figures 3, 4a et 4b.

La douille 64 comporte :
- un alésage axial 66 de passage de la tige 52,
- une fente traversante 68 débouchant dans l'alésage 66 et configurée pour autoriser une déformation sensiblement radiale de la douille, et
- un filetage externe 70 de vissage de la douille dans le filetage 58 du tronçon 56a de l'orifice 56.

L'alésage 66 a une forme générale cylindrique. Il a un diamètre D supérieur au diamètre d d'une section de la tige 52 (figure 4a), lorsque la douille 64 est à l'état libre sans contrainte. L'alésage 66 s'étend sur toute la dimension longitudinale de la douille 64 et débouche aux extrémités longitudinales de la douille.

La fente 68 a une forme rectiligne allongée et s'étend le long de l'axe longitudinal de la douille 64. Elle s'étend sur toute l'étendue longitudinale de la douille et sur toute son épaisseur radiale, compris entre l'alésage 66 et la surface périphérique externe de la douille.

La fente 68 s'étend entre deux bords longitudinaux 72 en regard de la douille. Ces bords 72 sont séparés l'un de l'autre par une distance L correspondant à la largeur de la fente 68.

Dans l'exemple représenté, la douille 64 comprend deux tronçons 64a, 64b adjacents, à savoir un tronçon 64a supérieur ou radialement externe et un tronçon 64b inférieur ou radialement interne. Le tronçon supérieur 64a a une forme générale cylindrique et comprend le filetage externe 70. Le tronçon inférieur 64b a une forme générale tronconique dont le diamètre diminue radialement de l'extérieur vers l'intérieur et de façon sensiblement complémentaire au tronçon 56c de l'orifice 56 du corps de l'anneau 36.

Comme cela est visible aux figures 4a et 4b, la douille 64 est déformable en direction radiale et peut en particulier être contrainte radialement. Elle est déformable depuis la position à l'état libre sans contrainte, représentée en figure 4a, jusqu'à une position contrainte, représentée en figure 4b, dans laquelle les bords 72 ont été rapprochés l'un de l'autre et l'alésage 66 adopte un diamètre correspondant au diamètre d de la tige 52. Dans cette dernière position, la douille 64 est serrée radialement sur la tige 52 et l'immobilise radialement vis-à-vis du corps de l'anneau. Le patin 40 est ainsi rendu immobile vis-à-vis du corps de l'anneau.

Selon l'invention, la déformation de la douille 64 est obtenue par son vissage dans l'orifice 56 du corps du carter, comme cela est expliqué dans le détail dans ce qui suit.

La douille 64 est engagée depuis l'extérieur dans l'orifice 56 du corps de l'anneau et le tronçon 64a de la douille est vissé partiellement dans le filetage 58 de l'orifice 56. La douille est alors dans la position représentée en figure 4a, c'est-à-dire à l'état libre sans contrainte. Comme expliqué dans ce qui précède, la tige 52 est engagée radialement depuis l'intérieur dans l'orifice 56 du corps de l'anneau ainsi que dans l'alésage 66 de la douille 64, jusqu'à ce que son filetage 54 soit situé radialement à l'extérieur de la douille 64 et puisse recevoir l'écrou 57. Préalablement, le ressort 62 est monté autour de la tige 52, entre le patin 40 et l'épaulement 60 du corps de l'anneau. L'anneau 36 peut alors être monté autour du carter de la turbomachine de façon à régler avec précision les jeux J précités. Ces jeux sont imposés par des cales provisoires qui sont intercalées entre les patins 40 et les pistes du carter. Le montage de ces cales entraîne une compression du ressort 62 qui sollicite le patin 40 contre la cale et assure ainsi que le jeu J correspond exactement à l'épaisseur de la cale utilisée. La douille 64 peut alors être vissée davantage et serrée dans l'orifice 56, de façon à ce que son tronçon 64b vienne en appui contre la paroi périphérique du tronçon 56c de l'orifice, ce qui se traduit par une contraction radiale de la douille 64 et son passage à la position représentée en figure 4b. La douille 64 est alors montée serrée sur la tige 52. La tige 52 et le patin 40 sont alors immobilisés par frottement dans cette position et la cale peut être retirée.

La douille 64 est par exemple réalisée en matériau métallique ou composite.

L'invention peut également être adaptée aux patins sous les pontets de liaison des secteurs du corps de l'anneau, de préférence en faisant en sorte que la partie supérieure de la douille ne dépasse pas de la face supérieure de l'anneau de commande.

La mise en oeuvre de cette invention permet de supprimer les usures des patins actuellement constatées en flotte, garantissant ainsi la bonne opérabilité du moteur.

La procédure de réglage des jeux sous patins est ici simplifiée car il n'est plus nécessaire de régler les jeux par vissage et dévissage du patin.

## Revendications

1. Anneau (36) de commande d'un étage d'aubes (14) à calage variable pour une turbomachine, comportant un corps annulaire destiné à s'étendre autour d'un carter (16), des moyens configurés pour être reliés à des pivots desdites aubes, et des moyens (40) qui sont configurés pour coopérer avec ledit carter afin de centrer et de guider ledit corps, et qui comportent au moins un organe d'appui sur le carter, qui est fixé au corps par des moyens de fixation (52, 64), **caractérisé en ce que** lesdits moyens de fixation comprennent au moins une douille (64) qui comporte :
- un alésage axial (66) de passage dudit organe ou d'un élément (52) de support dudit organe,
- une fente (68) traversante débouchant dans ledit alésage et configurée pour autoriser une déformation sensiblement radiale de la douille, et
- un filetage externe (70) de vissage de la douille dans un filetage (58) complémentaire d'un orifice (56) dudit corps,
ladite douille étant configurée de sorte que, lors de son vissage, elle coopère avec ledit corps pour se déformer sensiblement radialement depuis une première position dans laquelle ledit organe ou support peut être monté et déplacé dans ledit alésage, jusqu'à une seconde position dans laquelle ladite douille est contrainte radialement et montée serrée sur ledit organe ou support qui est ainsi immobilisé vis-à-vis de la douille.

2. Anneau de commande (36) selon la revendication 1, dans lequel ledit organe ou support comprend une tige cylindrique (52) engagée axialement dans ledit alésage (66).

3. Anneau de commande (36) selon la revendication 1 ou 2, dans lequel ledit organe comprend au moins un patin (40) d'appui sur le carter.

4. Anneau de commande (36) selon la revendication 3, en dépendance de la revendication 2, dans lequel ledit patin (40) est solidaire de ladite tige (52), et est par exemple formé d'une seule pièce avec ladite tige.

5. Anneau de commande (36) selon la revendication 3 ou 4, dans lequel des moyens (62) élastiquement déformables sont interposés entre le patin (40) et le corps pour solliciter ledit patin contre ledit carter.

6. Anneau de commande (36) selon la revendication 5, dans lequel lesdits moyens élastiquement déformables comprennent au moins un ressort de compression (62), par exemple hélicoïdal, monté autour de ladite tige (52).

7. Anneau de commande (36) selon l'une des revendications précédentes, dans lequel ladite douille (64) comprend au moins une partie (64b) sensiblement tronconique configurée pour coopérer avec une partie tronconique (56c) dudit orifice (56) de montage de la douille dudit corps.

8. Anneau de commande (36) selon la revendication 7, dans lequel ladite douille (64) comprend une partie cylindrique (64a) comportant ledit filetage externe (70).

9. Etage d'aubes (14) à calage variable pour une turbomachine, comportant une rangée annulaire d'aubes (12) à calage variable comportant chacune une pale (18) et un pivot cylindrique (20) à son extrémité radialement externe, l'étage comportant en outre un carter annulaire (16) comportant des orifices de montage des pivots des aubes, **caractérisé en ce que** lesdits pivots sont reliés par des leviers à un anneau de commande (36) selon l'une des revendications précédentes.

10. Turbomachine, **caractérisée en ce qu'**elle comprend au moins un anneau de commande (36) selon l'une des revendications 1 à 8 ou au moins un étage selon la revendication 9.

## Patentansprüche

1. Ring (36) zur Steuerung einer Stufe von Schaufeln (14) mit variabler Feststellposition für eine Turbomaschine, einschließlich eines ringförmigen Körpers, der dazu vorgesehen ist, sich um ein Gehäuse (16) zu erstrecken, Mitteln, die konfiguriert sind, um mit Drehzapfen der Schaufeln verbunden zu sein, und Mitteln (40), die konfiguriert sind, um mit dem Gehäuse zusammenzuarbeiten, um den Körper zu zentrieren und zu führen, und die mindestens ein Stützorgan auf dem Gehäuse einschließen, das am Körper durch Befestigungsmittel (52, 64) befestigt ist, **dadurch gekennzeichnet, dass** die Befestigungsmittel mindestens eine Hülse (64) umfassen, die einschließt:
- eine Durchgangs-Axialbohrung (66) des Organs oder eines Elements (52) zum Stützen des Organs,
- einen quer verlaufenden Schlitz (68), der in die Bohrung mündet und konfiguriert ist, um eine im Wesentlichen radiale Verformung der Hülse zu erlauben, und
- ein äußeres Gewinde (70) zum Schrauben der Hülse in ein Gewinde (58), das komplementär zu einer Öffnung (56) des Körpers ist,
wobei die Hülse so konfiguriert ist, dass sie bei ihrem Schrauben mit dem Körper zusammenarbeitet, um sich im Wesentlichen radial zu verformen, ausgehend von einer ersten Position, in der das Organ oder die Stütze im Schlitz angebracht und verschoben werden kann, bis zu einer zweiten Position, wobei die Hülse radial gespannt ist und eng an dem Organ oder der Stütze angebracht ist, das oder die so in Bezug auf die Hülse immobilisiert ist.

2. Ring zur Steuerung (36) nach Anspruch 1, wobei das Organ oder die Stütze eine zylindrische Stange (52) umfasst, die die Bohrung (66) axial in Eingriff nimmt.

3. Ring zur Steuerung (36) nach Anspruch 1 oder 2, wobei das Organ mindestens einen Gleiter (40) zur Auflage auf dem Gehäuse umfasst.

4. Ring zur Steuerung (36) nach Anspruch 3, in Abhängigkeit von Anspruch 2, wobei der Gleiter (40) fest mit der Stange (52) verbunden ist und zum Beispiel aus einem einzigen Stück mit der Stange geformt ist.

5. Ring zur Steuerung (36) nach Anspruch 3 oder 4, wobei elastisch verformbare Mittel (62) zwischen dem Gleiter (40) und dem Körper eingefügt sind, um den Gleiter gegen das Gehäuse zu drücken.

6. Ring zur Steuerung (36) nach Anspruch 5, wobei die elastisch verformbaren Mittel mindestens eine zum Beispiel spiralförmige Kompressionsfeder (62) umfassen, die um die Stange (52) herum angebracht ist.

7. Ring zur Steuerung (36) nach einem der vorstehenden Ansprüche, wobei die Hülse (64) mindestens einen im Wesentlichen kegelstumpfförmigen Teil (64b) umfasst, der konfiguriert ist, um mit einem kegelstumpfförmigen Teil (56c) der Öffnung (56) zum Anbringen der Hülse des Körpers zusammenzuarbeiten.

8. Ring zur Steuerung (36) nach Anspruch 7, wobei die Hülse (64) einen zylindrischen Teil (64a) umfasst, der das äußere Gewinde (70) einschließt.

9. Stufe von Schaufeln (14) mit variabler Feststellposition für eine Turbomaschine, einschließlich einer ringförmigen Reihe von Schaufeln (12) mit variabler Feststellposition, die jeweils ein Schaufelblatt (18) und einen zylindrischen Drehzapfen (12) an ihrem radial äußeren Ende einschließen, wobei die Stufe weiter ein ringförmiges Gehäuse (16) einschließt, das Öffnungen zum Befestigen der Drehzapfen der Schaufeln einschließt, **dadurch gekennzeichnet, dass** die Drehzapfen durch Hebelarme an einen Ring zur Steuerung (36) nach einem der vorstehenden Ansprüche verbunden sind.

10. Turbomaschine, **dadurch gekennzeichnet, dass** sie mindestens einen Ring zur Steuerung (36) nach einem der Ansprüche 1 bis 8 oder mindestens eine Stufe nach Anspruch 9 umfasst.

## Claims

1. Control ring (36) for a stage of variable-pitch vanes (14) for a turbine engine, comprising an annular body intended to extend around a casing (16), means designed to be connected to pivots of said vanes, and means (40) that are designed to cooperate with said casing so as to centre and guide said body and that comprise at least one member for bearing on the casing that is fixed to the body by fixing means (52, 64), **characterised in that** said fixing means comprise at least one bushing (64) which comprises:
- an axial bore (66) for the passage of said member or an element (52) for supporting said member;
- a through-slot (68) opening into said bore and designed to allow a substantially radial deformation of the bushing; and
- an outer thread (70) for screwing the bushing into a complementary thread (58) of a hole (56) in said body,
said bushing being designed so that when it is screwed in it cooperates with said body so as to substantially radially deform from a first position, in which said member or support can be mounted and moved inside said bore, to a second position, in which said bushing is radially constrained and is tightly mounted on said member or support, which is thus immobilised in relation to the bushing.

2. Control ring (36) according to claim 1, wherein said member or support comprises a cylindrical rod (52) axially engaged in said bore (66).

3. Control ring (36) according to either claim 1 or claim 2, wherein said member comprises at least one pad (40) for bearing on the casing.

4. Control ring (36) according to claim 3, when dependent on claim 2, wherein said pad (40) is rigidly connected to said rod (52) and is formed as a single piece with said rod, for example.

5. Control ring (36) according to either claim 3 or claim 4, wherein elastically deformable means (62) are interposed between the pad (40) and the body in order to urge said pad against said casing.

6. Control ring (36) according to claim 5, wherein said elastically deformable means comprise at least one compression spring (62), for example a coil spring, mounted around said rod (52).

7. Control ring (36) according to any of the preceding claims, wherein said bushing (64) comprises at least one substantially frustoconical portion (64b) designed to cooperate with a frustoconical portion (56c) of said hole (56) in said body for mounting the bushing.

8. Control ring (36) according to claim 7, wherein said bushing (64) comprises a cylindrical portion (64a) comprising said outer thread (70).

9. Stage of variable-pitch vanes (14) for a turbine engine, comprising an annular row of variable-pitch vanes (12) each comprising a blade (18) and a cylindrical pivot (20) at its radially outer end, the stage further comprising an annular casing (16) comprising mounting holes for the pivots of the vanes, **characterised in that** said pivots are connected by levers to a control ring (36) according to any of the preceding claims.

10. Turbine engine, **characterised in that** it comprises at least one control ring (36) according to any of claims 1 to 8 or at least one stage according to claim 9.
